# EUROPEAN PATENT SPECIFICATION

(11) **EP 0 505 542 B1**
(45) Date of publication and mention of the grant of the patent: **07.02.1996**
(21) Application number: 91918339.2
(22) Date of filing: 14.10.1991
(51) Int. Cl.: C04B 22/10, C08K 3/26

(54) **ADDITIVE COMPOSITION WITH INSULATING, IMPERMEABILIZING AND ANTISHRINK PROPERTIES**
ADDITIVZUSAMMENSETZUNG MIT ISOLIERENDEN, UNDURCHLÄSSIGEN, UND ANTISCHRUMPF-EIGENSCHAFTEN
COMPOSITION D'ADDITIF PRESENTANT DES CARACTERISTIQUES D'ISOLATION, D'IMPERMEABILISATION ET D'ANTI-RETRECISSEMENT

(30) Priority: 17.10.1990 IT 6630290
(43) Date of publication of application: 30.09.1992
(73) Proprietor: SOMERGOM S.r.l., I-74100 Taranto (IT)
(72) Inventor: TURE, Antonio, I-74100 Taranto (IT)
(74) Representative: Modiano, Guido, Dr.-Ing.
(86) International application number: EP9101947
(87) International publication number: WO9206933

(56) References cited:
- EP-A- 0 054 874
- F.M.LEA 'The Chemistry of Cement and Concrete' 1970 , E.ARNOLD LTD, 3rd ed. , LONDON,GB see page 533 - page 536 see page 569 - page 578
- PATENT ABSTRACTS OF JAPAN vol. 015, no. 323 (E-1101)18 August 1991 & JP,A,3 120 893 ( SANYO ELECTRIC CO.) 23 May 1991, see abstract
- PATENT ABSTRACTS OF JAPAN vol. 013, no. 049 (C-565)3 February 1989 & JP,A,63 243 121 ( HITACHI CHEM. CO. ) 11 October 1988 see abstract

## Description

The present invention relates to a composition comprising an additive, in powder or liquid form, with insulating and impermeabilizing properties and with antishrink and flocculating characteristics. These peculiarities make it particularly suitable, more than other similar products, for many applications in civil engineering (thin concrete slabs, plasters, mortars, prefabricated elements, refractory elements, coverings, etc.) and in industrial chemistry (flocculant for water treatment or bonding agent for protective coatings against the corrosion and oxidation of metals, etc.).

Known from Patent Abstracts of Japan, vol 15, no 323, (E-1101) (& JP-A 3 120 893) is the use of a mixture of mica and calcium carbonate with polypropylene for molding large sheath bodies with low shrinkage.

The main but not exclusive field of application of the present invention is that of bonding agents. This term indicates substances which, when mixed with water, produce a plastic mass which undergoes, in the course of time, a progressive hardening process until it achieves high mechanical strength. Bonding agents are used to join and keep together other construction elements, to which the mortar adapts and adheres strongly. They are divided into two major categories: air-hardening and hydraulic bonding agents. The first ones (air-hardening limes, plasters, etc.) set and harden only when exposed to air, whereas the second ones (cements, hydraulic limes, etc.) can set and harden even if they are immersed in water. This last property is due to the presence, in hydraulic bonding agents, of a series of compounds (calcium silicates, aluminates and ferrites), which can react with water, producing insoluble or scarcely soluble hydrated products which have cementing properties.

### Disclosure of the invention

According to a first embodiment of the present invention, an additive is provided for bonding agents with insulating, impermeabilizing and antishrink properties, comprising a mixture of carbonates which, expressed as their respective oxides, comprises in weight percentages, 0 to 1% Fe₂O₃, 65 to 80% CaO, 20 to 30% SiO₂, 0 to 2% Al₂O₃ and 0 to 1% MgO.

According to a further embodiment of the present invention an additive composition is provided for building materials, water treatment and protective coating applications, comprising from 99.9 to 85% by weight of a bonding agent and 0.1 to 15% by weight of an additive according to claim 1. For example the additive composition comprises from 95 to 85% of bonding agent and from 5 to 15% of the new additive.

### Ways of carrying out the invention

The bonding agent with which the additive according to the present invention is employed so as to confer upon it improved insulating, impermeabilizing and antishrink properties can mainly comprise cements of any kind used in building materials, alone or in mixture with further components known to improve their physical, thermal and impermeableness characteristics.

Alternatively, other bonding materials can be employed which are known to be useful in building materials or for other applications such as water treatment or protective coating applications, such as anticorrosive coatings.

In particular the bonding agent can be selected from:
(i) - a cement of any type (Portland, pozzolanic, slag, aluminous, blast furnance, quick setting, refractory, etc.) having an average grain size of 60 µm;
(ii) - synthetic resins or natural polymers, amongst which butadiene and styrene based polymers and copolymers can be mentioned merely by way of non-limitative examples;
(iii) - silicates and binding acids, for example calcium, aluminium or sodium silicates and phosphoric acid or aluminum phosphate.

The above bonding agents can be used alone or in various blends one with the other according to the intended final use and based on the common technical knowledges in the respective field of application. They can also comprise various inert materials such as expanded clay, silica sand, alumina, magnesite, calcareous grit, etc. with an average grain size of 60 micrometers, which can be used in various proportions up to 50% of the bonding agent, according to the common knowledge in the field.

The additive composition according to the invention comprising said carbonates additive and one or more selected bonding agent, can be prepared in powder or liquid form.

The powder is obtained by the following processing steps:
- mixing of the components with an appropriate amount of water, so as to obtain a final mix in the form of a mortar;
- hardening (also facilitated by heating);
- grinding so as to obtain a powder.

The liquid form of the additive composition is instead obtained by adding to the above mixture, before hardening, at least one resin selected from epoxy, acrylic, phenolic, polyurethane, or other resins known for uses with bonding agents.

The additive composition according to the invention has improved physical, thermal and other characteristics, among which mention is made of:
- lower thermal conductivity with respect to that of known powder cements;
- a much lower thermal expansion with respect to said known powder cements; in particular at low temperatures (-20 to +20 °C), the expansion of the additive composition according to the invention is approximately six times smaller, whereas at higher temperatures (+20 to +80°C) it becomes approximately twenty times smaller, being anyway equal or lower than 0,8x10⁻6 mm/mm K
- a high specific heat. In particular, it is three to four times higher than that of an ordinary Portland cement, being of at least 4J/g/°C;
- a rather short setting time, in any case comparable with that of quick-setting cements;
- a low permeability to water vapor, of no more than 3x10⁻¹¹ Kg/(m.s.Pa)
- an equally low permeability to water, of no more than 3x10⁻⁹ m/s
- a complete absence of toxicity, as shown by a low release both in oil and in a solution of 15% ethanol and 3% acetic acid according to Italian standards set in DM 21/3/73;
- a high agglomerating capacity for oils and organic substances;
- a high resistance to penetration by ultraviolet rays;
- a considerable durability;
- a good fire resistance.

These characteristics allow one to use the additive composition of the invention, in powder or liquid form, with better results than those which can be obtained with other similar products, especially in the field of civil engineering, among which the following are mentioned by way of non-limitative example:
- thin concrete slabs for industrial pavement or floors allowing transit of heavy vehicles;
- thin waterproof insulating slabs for walkable outdoor pavements;
- waterproof and insulating plasters;
- mortar, bricks, prefabricated elements, refractory elements;
- protective, insulating, corrosion-resistant, oxidation-resistant and impermeabilizing coverings for every surface of any kind of material (metal, polymer, cement, wood, etc.).

The inventive additive composition is furthermore suitable for being used as flocculant for the treatment of water.

### Example

A practical formulation of the additive according to the invention comprises a mixture of carbonates having a weight loss upon calcination of 69,21%, a calcination residue of 30,79% by weight, and a metal and metalloid content, expressed as % by weight of the respective oxides obtained by calcination of the carbonate mixture of:
0,32% Fe₂O₃, 72,53% CaO, 25,64% SiO₂, 0,98% Al₂O3 and 0,49% MgO.

This additive is mixed with Portland cement in a proportion of 10% additive and 90% cement and is used for manufacturing building materials such as plasters and slabs.

## Claims

1. Additive composition for building materials, water treatment and protective coating applications comprising from 99.9% to 85% by weight of a bonding agent and 0.1 to 15% by weight of an additive, characterized in that said additive containing a mixture of carbonates which, expressed as their respective oxides, comprises in weight percentages, 0-1 % Fe₂O₃, 65-80 % CaO, 20-30 % SiO₂, 0-2 % Al₂O3 and 0-1 % MgO.

2. Additive composition according to claim 1, characterized in that said bonding agent is a cement for building materials selected from a group consisting of Portland cement, pozzolanic cement, aluminous cement, blast furnace cement, quick setting cement and refractory cement.

3. Additive composition according to claim 1, characterized in that said bonding agent is selected from a group consisting of synthetic resins, silicates, phosphoric acid, alone or in mixture with a cement.

4. Additive composition according to claim 3, characterized in that said synthetic resin is selected from the group consisting of butadiene or styrene based polymers or copolymers.

5. Additive composition according to claim 3, characterized in that said silicates are selected from a group consisting of calcium, aluminium and sodium silicates.

6. Additive composition according to claim 3, characterized in that said bonding agent is phosphoric acid.

7. Additive composition according to claim 1, characterized in that said composition is prepared in a powder form.

8. Additive composition according to claim 1, characterized in that said composition is prepared in a liquid form, said composition further comprising a resin selected from a group consisting of epoxy, acrylic, phenolic, and polyurethane resins, said resin being mixed with said additive and bonding agent.

## Patentansprüche

1. Additivzusammensetzung für Baumaterialien, für die Wasseraufbereitung und für Schutzüberzüge, wobei die Zusammensetzung 99,9 Gew% bis 85 Gew% eines Bindemittels und 0,1 Gew% bis 15 Gew% eines Additivs enthält, dadurch **gekennzeichnet**, daß das Additiv eine Mischung von Carbonaten enthält, die, ausgedrückt als das jeweilige Oxid, in Gewichtsprozent 0-1% Fe₂O₃, 65-80% CaO, 20-30% SiO₂, 0-2% Al₂O₃ und 0-1% MgO enthält.

2. Additivzusammensetzung nach Anspruch 1, dadurch **gekennzeichnet**, daß das Bindemittel ein Zement für Baumaterialien ist, der aus einer Gruppe gewählt ist, die Portlandzement, Pozzolanzement, Tonerdezement, Hochofenzement, schnellbindenden Zement und feuerfesten Zement enthält.

3. Additivzusammensetzung nach Anspruch 1, dadurch **gekennzeichnet**, daß das Bindemittel aus einer Gruppe ausgewählt ist, die Kunstharze, Silicate, Phosphorsäure, unvermischt oder gemischt mit einem Zement, enthält.

4. Additivzusammensetzung nach Anspruch 3, dadurch **gekennzeichnet**, daß das Kunstharz aus der Gruppe gewählt ist, die Polymere oder Copolymere auf Butadien- oder Styrolbasis enthält.

5. Additivzusammensetzung nach Anspruch 3, dadurch **gekennzeichnet**, daß die Silicate aus einer Gruppe ausgewählt sind, die Calcium-, Aluminium- und Natriumsilicate enthält.

6. Additivzusammensetzung nach Anspruch 3, dadurch **gekennzeichnet**, daß das Bindemittel Phosphorsäure ist.

7. Additivzusammensetzung nach Anspruch 1, dadurch **gekennzeichnet**, daß die Zusammensetzung in Pulverform hergestellt ist.

8. Additivzusammensetzung nach Anspruch 1, dadurch **gekennzeichnet**, daß die Zusammensetzung in flüssiger Form hergestellt ist, und daß sie ferner ein Harz enthält, das aus einer Gruppe ausgewählt ist, die Epoxid-, Acryl-, Phenol- und Polyurethanharze enthält, wobei das Harz mit dem Additiv und dem Bindemittel vermischt ist.

## Revendications

1. Composition d'additif pour des matériaux de construction, le traitement de l'eau et des applications de revêtements protecteurs, comprenant de 99,9% à 85% en poids d'un agent de liaison et 0,1 à 15% en poids d'un additif, caractérisée en ce que cet additif contient un mélange de carbonates qui, exprimé en tant que leurs oxydes respectifs, comprend, en pourcentage en poids, 0 à 1% de Fe₂O₃, 65 à 80% de CaO, 20 à 30% de SiO₂, 0 à 2% de Al₂O₃ et 0 à 1% de MgO.

2. Composition d'additif selon la revendication 1, caractérisée en ce que ledit agent de liaison est un ciment pour des matériaux de construction sélectionnés dans un groupe comprenant un ciment Portland, un ciment pouzzolanique, un ciment alumineux, un ciment de haut fourneau, un ciment à prise rapide et un ciment réfractaire.

3. Composition d'additif selon la revendication 1, caractérisée en ce que ledit agent de liaison est sélectionné dans un groupe comprenant des résines synthétiques, des silicates, un acide phosphorique, seuls ou en mélange avec un ciment.

4. Composition d'additif selon la revendication 3, caractérisée en ce que ladite résine synthétique est choisie dans le groupe comprenant des polymères ou des copolymères à base de butadiène ou de styrène.

5. Composition d'additif selon la revendication 3, caractérisée en ce que lesdits silicates sont choisis dans un groupe comprenant des silicates de calcium, d'aluminium et de sodium.

6. Composition d'additif selon la revendication 3, caractérisée en ce que ledit agent de liaison est un acide phosphorique.

7. Composition d'additif selon la revendication 1, caractérisée en ce que ladite composition est préparée sous forme de poudre.

8. Composition d'additif selon la revendication 1, caractérisée en ce que ladite composition est préparée sous forme liquide, ladite composition comprenant en outre une résine choisie dans un groupe comprenant des résines époxy, acryliques, phénoliques et polyuréthane, ladite résine étant mélangée avec ledit additif et ledit agent de liaison.
